# FASCICULE DE BREVET EUROPEEN

(11) **EP 3 394 752 B1**
(45) Date de publication et mention de la délivrance du brevet: **25.09.2019**
(21) Numéro de dépôt: 16826401.8
(22) Date de dépôt: 19.12.2016
(51) Int. Cl.: G06F 9/455, H04L 12/911, H04L 12/24, G06F 9/50, H04W 16/00

(54) **PROCÉDÉ D'ALLOCATION DE RESSOURCES D'EXÉCUTION**
VERFAHREN ZUR ZUWEISUNG VON AUSFÜHRUNGSRESSOURCEN
METHOD OF ALLOCATING EXECUTION RESOURCES

(30) Priorité: 21.12.2015 FR 1562999
(43) Date de publication de la demande: 31.10.2018
(73) Titulaire: Orange, 75015 Paris (FR)
(72) Inventeur: BIHANNIC, Nicolas, 22560 Trebeurden (FR); ROUSSET, Pascal, 22300 Lannion (FR); GROSCLAUDE, Irène, 22700Perros Guirec (FR)
(86) Numéro de dépôt international: PCT/FR2016/053553
(87) Numéro de publication internationale: WO 2017/109367

(56) Documents cités:
- US-A1- 2013 304 923
- US-A1- 2014 089 510
- US-A1- 2014 282 528

## Description

L'invention se situe dans le domaine des réseaux de télécommunication, et concerne plus particulièrement un procédé d'allocation de ressources d'exécution au sein d'une infrastructure de ressources virtualisées comme une infrastructure en nuage.

L'organisme de normalisation ETSI (pour « European Télécommunications Standards Institute ») a lancé début 2013 un projet dénommé NFV (pour «Network Functions Virtualization ») pour établir, entre les experts des secteurs des télécommunications et des technologies de l'information, les premières spécifications dans le domaine de la virtualisation (c'est-à-dire la dématérialisation) des fonctions utilisées dans les réseaux de télécommunications, désignées par la suite par fonctions réseau virtualisées (également appelées VNF pour « Virtualized Network Function »). Ces fonctions réseau virtualisées désignent par exemple les fonctions mises en oeuvre par une entité de gestion de mobilité virtualisée (e.g. MME pour « Mobility Management Entity »), une passerelle (e.g. P-GW pour «PDN Gateway »), un pare-feu, etc. Composées ensemble, les fonctions réseau virtualisées forment des services réseaux correspondant par exemple à un coeur de réseau IMS (pour «IP Multimedia Subsystem »), un réseau de distribution de contenus (ou réseau CDN pour « Content Distribution Network »), ou encore un coeur de réseau EPC (pour « Evolved Packet Core »). La virtualisation des fonctions réseau est réalisée notamment sur des infrastructures dites en nuage, plus communément désignés par « cloud », qui implémentent et hébergent ces fonctions sur des machines virtuelles accessibles par exemple par l'intermédiaire d'une application réseau. Ces machines virtuelles utilisent des ressources informatiques et réseau matérielles distantes (ex. connectivité réseau, puissance de calcul, espaces de stockage, serveurs, applications, etc.), gérées par l'infrastructure en nuage, et mutualisées entre ses différents clients en fonction de leurs besoins respectifs. Les clients peuvent ainsi accéder à ces ressources sans avoir à administrer l'infrastructure sous-jacente de gestion de ces ressources, qui est souvent complexe. Les demandes de ressources se font soit service réseau par service réseau, soit fonction réseau par fonction réseau.

L'ETSI introduit par ailleurs dans un livre blanc intitulé « Mobile-Edge Computing - Introductory Technical White Paper » daté du 18 septembre 2014, une infrastructure en nuage nommée MEC pour « Mobile Edge Computing ». Une infrastructure MEC se compose de centres de données (« Datacenter » en anglais) distribués plus près des points d'accès d'un réseau d'opérateur (PoP pour « Point of Presence» en anglais). Une telle infrastructure MEC permet de mieux répondre à l'évolution des services sur réseau mobile. Le domaine des communications mobiles requiert en effet de pouvoir traiter un volume de trafic important avec une faible latence, ce à quoi une infrastructure classique reposant sur des centres de données très centralisés ne permet pas de répondre de manière optimale. Une infrastructure MEC permet ainsi une faible latence et peut être utilisée pour réaliser des pré-traitements relatifs à un service applicatif de manière décentralisée, en relayant ensuite uniquement l'information utile issue de ces pré-traitements vers un centre de données centralisé chargé d'offrir le service applicatif ; ceci permet le traitement d'un grand volume de données.

Cette infrastructure MEC présente cependant des inconvénients de par un environnement contraint en termes de ressources (e.g. capacité de calcul, de stockage, bande passante) disponibles au niveau des centres de données décentralisés. La localisation plus près des points d'accès à un réseau ne permet pas en effet à ces centres de données décentralisées de disposer d'un volume important de ressources. Cette limitation des ressources peut notamment conduire à une pénurie de ressources lorsque plusieurs entités clientes d'une telle infrastructure en nuage demandent simultanément une allocation de ressources pour le traitement de leurs services respectifs.

A titre d'exemple, nous pouvons considérer le cas d'un service applicatif de relevé de consommation électrique d'un fournisseur d'électricité dépendant de services réseau pour le relevé de compteurs électriques munis de capteurs aptes à se connecter à un réseau d'opérateur de télécommunications. Dans l'exemple considéré, la connexion au réseau d'opérateur est à l'initiative des capteurs. L'opérateur de télécommunications utilise les ressources d'exécution d'une infrastructure en nuage MEC pour l'exécution de fonctions mobiles telles que l'identification, l'authentification des capteurs (munis par exemple de carte SIM pour « Subscriber Identity Module »), l'attachement des capteurs au réseau, le routage des données émises par les capteurs vers une entité du fournisseur d'électricité. Le fournisseur d'électricité utilise également les ressources d'exécution de l'infrastructure en nuage MEC pour son propre compte afin de traiter les données obtenues au moyen des capteurs.

En l'absence de coopération entre le fournisseur d'électricité et l'opérateur de télécommunications, la limitation des ressources d'exécution disponibles est susceptible de perturber le fonctionnement du service de relevé de consommation électrique ainsi que les services réseau. En effet lorsque les capteurs d'une zone géographique donnée s'attachent au réseau et transmettent leurs données, il s'ensuit une augmentation du volume de ressources d'exécution allouées aux services réseau. Si le nombre de connexions demeure supérieur au nombre de déconnexions, le volume de ressources d'exécution allouées pour le traitement des services réseau croît. Les données des capteurs sont transmises au service de relevé de consommation électrique du fournisseur d'électricité à mesure qu'elles sont obtenues. Lorsqu'elles sont en quantité suffisante, le service de relevé de consommation électrique demande à son tour des ressources d'exécution à l'infrastructure en nuage MEC afin de les traiter. Cette dernière répond par exemple à cette demande en allouant ses dernières ressources d'exécution pour le service de relevé de consommation électrique. L'ensemble des ressources d'exécution de l'infrastructure en nuage MEC étant utilisé par le service de relevé de consommation et par les services réseau pour les capteurs déjà connectés, il n'est alors plus possible de connecter de nouveaux capteurs au réseau. Le service de relevé de consommation électrique ne peut plus être rendu de manière optimale.

US 2013304923 A1 décrit un système pour gérer des ressources virtualisées, qui reçoit une requête de réserve pour un ensemble de ressources, dynamiquement alloue l'ensemble de ressources, alloue une clé à cet ensemble, et maintient l'ensemble dans un état de réserve, jusqu'à ce qu'une requête d'utilisation de cet ensemble de ressources contenant cette clé est reçue.

US 2014089510 décrit un système pour recevoir une requête de ressources de nuage et d'une indication de la quantité des ressources demandée. La requête peut aussi contenir une demande de ressources de réseau ou une ou plusieurs contraintes. Un ensemble d'allocations possibles est déterminé, et une allocation est sélectionné parmi cet ensemble d'allocations possibles.

US 2014282528 décrit des outils et techniques pour implémenter une cadre de contrôle de congestion de virtualisation. Un moteur orchestrateur est mis à disposition dans un environnement de machines virtuelles pour fournir une communication en deux directions entre une machine virtuelle et une ou plusieurs machines virtuelles de l'environnement de machines virtuelles, pour contrôler la congestion de l'usage de ressources matérielles.

Un des buts de l'invention est de remédier à des insuffisances/inconvénients de l'état de la technique et/ou d'y apporter des améliorations.

Selon un premier aspect, l'invention concerne un procédé d'allocation de ressources d'exécution, par une entité gestionnaire de ressources virtualisées, pour une exécution d'un service applicatif et d'au moins un service réseau, l'exécution du service applicatif dépendant de l'exécution concurrente dudit au moins un service réseau. Le procédé comprend :
- une première demande d'allocation de ressources d'exécution par une entité gestionnaire dudit au moins un service réseau à l'entité gestionnaire de ressources virtualisées ;
- une deuxième demande d'allocation de ressources d'exécution par une entité gestionnaire du service applicatif à l'entité gestionnaire de ressources virtualisées ;
caractérisé en ce que le procédé comprend, préalablement à ces demandes, une notification, par l'entité gestionnaire du service applicatif, d'une consommation prévue par le service applicatif d'au moins un service réseau fourni par l'entité gestionnaire de services réseau, à l'entité gestionnaire de services réseau.

La notification envoyée par l'entité gestionnaire de services applicatifs à l'entité gestionnaire de services réseau permet d'informer cette dernière de la consommation prévue en services réseau par le service applicatif. Une coopération entre entités clientes de l'entité gestionnaire de ressources virtualisées est ainsi rendue possible lors de l'expression par ces dernières de leurs besoins respectifs en ressources d'exécution. L'entité gestionnaire de services réseau est notamment en mesure, grâce à cette notification, d'anticiper ses propres besoins en ressources d'exécution. Le procédé permet ainsi à l'entité gestionnaire de services réseau de caractériser l'évolution de son besoin en ressources d'exécution pour exécuter les services réseau sur lesquels repose le service applicatif.

Le procédé permet en outre à l'entité gestionnaire de service applicatif d'exprimer son besoin en ressources d'exécution auprès de l'entité gestionnaire de ressources virtualisées en tenant compte de la satisfaction des demandes d'allocations de ressources d'exécutions de l'entité gestionnaire de service réseau.

La coopération entre entité clientes de l'entité gestionnaire de ressources virtualisées permet en particulier d'éviter que des ressources d'exécution ne soient monopolisées inutilement par une seule entité cliente. Ceci est particulièrement avantageux lors de l'exécution de services interdépendants entre eux. En l'absence de coopération, l'entité cliente effectuant la première sa demande d'allocation de ressources d'exécution est servie la première sans qu'il soit tenu compte des demandes d'allocation de ressources émises par d'autres entités. Une telle situation peut rapidement se traduire par une pénurie en ressources d'exécution pour ces autres entités.

Revenant sur l'exemple précédemment donné en introduction d'un service applicatif de relevé de consommation électrique d'un fournisseur d'électricité dépendant de services réseau pour le relevé de compteurs électriques, le procédé permet une coopération entre le service de relevé de consommation électrique et les services réseau pour la gestion de la répartition des ressources d'exécution entre services, et permet ainsi d'éviter une dégradation voire une interruption de service. La qualité de service est ainsi améliorée.

Selon une caractéristique particulière, la notification par l'entité gestionnaire du service applicatif comprend en outre au moins un palier de consommation intermédiaire indiquant une consommation intermédiaire inférieure à la consommation prévue, la première demande de ressources d'exécution comprenant au moins un palier de ressources d'exécution correspondant audit au moins un palier de consommation intermédiaire.

La présence d'un ou plusieurs paliers de consommation intermédiaire dans la notification d'une consommation prévue permet à l'entité gestionnaire de services applicatifs de proposer différentes solutions de repli à l'entité gestionnaire de services réseau, lorsque les services réseau ne peuvent répondre aux besoins exprimés par la consommation à venir. Ces paliers de consommation intermédiaire permettent ainsi de converger rapidement (par dichotomie par exemple) vers un besoin acceptable en services réseau par l'entité gestionnaire de services réseau.

En cas d'insuffisance de ressources d'exécution pour le service applicatif et les services réseau, il est ainsi possible de solliciter l'entité gestionnaire de ressources virtualisées pour qu'elle alloue un volume de ressources d'exécution moins important que celui requis par la consommation prévue du service applicatif mais permettant néanmoins d'utiliser le plus efficacement possible les ressources d'exécution.

Selon une caractéristique particulière, la notification par l'entité gestionnaire du service applicatif comprend en outre au moins un palier de consommation intermédiaire indiquant une consommation intermédiaire inférieure à la consommation prévue, la première demande de ressources d'exécution étant suivie lorsqu'elle n'est pas satisfaite, par des demandes successives de ressources d'exécution correspondants aux paliers de consommation intermédiaires, jusqu'à satisfaction de l'une desdites demandes successives.

Selon une caractéristique particulière, le procédé comprend en outre, en réponse à la première demande de ressources d'exécution, une notification de la consommation en services réseau acceptée par l'entité gestionnaire de services réseau à l'entité gestionnaire de services applicatifs préalablement à la deuxième demande de ressources d'exécution, la deuxième demande étant fonction desdites ressources d'exécution réservées.

La notification de réservation de ressources d'exécution permet à l'entité gestionnaire de services applicatifs d'adapter sa demande d'allocation de ressources d'exécutions en fonction des ressources d'exécution effectivement réservées par l'entité gestionnaire de ressources virtualisées pour l'exécution de services réseau.

Il est ainsi possible pour l'entité gestionnaire de services applicatifs d'ajuster sa demande en ressources d'exécution afin de requérir un volume de ressources d'exécution inférieur à celui nécessaire à une consommation initialement prévue. Une gestion plus efficace des ressources afin d'optimiser la qualité de service est ainsi permise.

Selon une caractéristique particulière, le procédé comprend en outre, lorsque la notification de la consommation en services réseau acceptée indique que la première demande de ressources d'exécution est insatisfaite, une mise en attente de la deuxième demande de ressources.

Dans le cas où l'entité gestionnaire de ressources virtualisées n'est plus en mesure d'allouer aucune ressource d'exécution tant à l'entité gestionnaire de services applicatifs qu'à l'entité gestionnaire de services réseau, l'entité gestionnaire de services applicatifs est également informée. Cette dernière peut alors différer sa demande de ressources d'exécution, ce qui évite de surcharger le trafic réseau par l'envoi d'une requête qui ne peut être satisfaite.

Selon une caractéristique particulière, le procédé comprend en outre, lorsque la notification de consommation en services réseau acceptée indique que la première demande de ressources d'exécution est insatisfaite, une demande de l'entité gestionnaire de services applicatifs à l'entité gestionnaire de ressources virtualisées d'une réservation de ressources de stockage, les ressources de stockage correspondant à un volume estimé de données à transmettre par l'entité gestionnaire de services réseau à l'entité gestionnaire de services applicatif après exécution dudit au moins un service réseau, l'exécution du service applicatif étant différée.

En cas de pénurie de ressources d'exécution, le procédé permet avantageusement de réserver des ressources de stockage et de créer ainsi une zone tampon dans laquelle sont stockées des données à traiter en attendant que des ressources d'exécution soient de nouveau disponibles. Les services réseau considérés plus prioritaires que le service applicatif sont alors traités dans un premier temps, les données issues de ce traitement étant stockées au sein des ressources de stockage réservées à cette fin. Puis dans un deuxième temps, lorsque les ressources d'exécutions utilisées par les services réseau sont libérées, elles peuvent être allouées pour l'exécution du service applicatif, moins prioritaire car dépendant des services réseau. Le procédé permet ainsi de fournir un service applicatif quand bien même l'environnement serait fortement contraint en ressources d'exécution.

Selon un deuxième aspect, l'invention concerne une entité gestionnaire de services applicatifs fournissant un service applicatif dont l'exécution dépend d'une exécution concurrente d'au moins un service réseau par une entité gestionnaire de services réseau, comprenant :
- un module d'envoi/réception agencé pour envoyer une notification d'une consommation prévue par le service applicatif dudit au moins un service réseau, à l'entité gestionnaire de services réseau, et pour recevoir de cette entité gestionnaire de services réseau une notification de la consommation en services réseau acceptée par cette dernière ;
   - un module d'envoi agencé pour envoyer une demande d'allocation de ressources d'exécution, à l'entité gestionnaire de ressources virtualisées ainsi qu'une demande d'allocation de ressources de stockage.

Selon une caractéristique particulière, l'entité gestionnaire de services applicatifs comprend en outre un module de temporisation activé lorsque la notification de réservation indique qu'une demande d'allocation de ressources d'exécution par l'entité gestionnaire de service réseau est insatisfaite, et agencé pour mettre en attente une demande d'allocation de ressources d'exécution du gestionnaire de services applicatifs.

Selon un troisième aspect, l'invention concerne une entité gestionnaire de services réseau, fournissant au moins un service réseau, pour l'exécution d'un service applicatif par une entité de gestion de services applicatifs. L'entité gestionnaire de services réseau comprend :
- un module d'envoi/réception agencé pour recevoir une notification, depuis l'entité gestionnaire de services applicatifs, d'une consommation prévue par le service applicatif dudit au moins un service réseau, et pour envoyer à l'entité gestionnaire de services applicatifs une notification de la consommation en services réseau acceptée par l'entité gestionnaire de services réseau pour l'exécution dudit au moins un service réseau ;
   - un module d'envoi agencé pour envoyer une demande d'allocation des ressources d'exécution pour l'exécution dudit au moins un service réseau, à une entité gestionnaire de ressources virtualisées.

Selon un quatrième aspect, l'invention concerne un système d'allocation de ressources d'exécution, pour une exécution d'un service applicatif et d'au moins un service réseau, l'exécution du service applicatif dépendant de l'exécution concurrente dudit au moins un service réseau. Le système comprend :
- une entité gestionnaire de services applicatifs, cette entité gestionnaire de services applicatifs fournissant le service applicatif ;
- une entité gestionnaire de services réseau selon le troisième aspect, cette entité gestionnaire de services réseau fournissant ledit au moins un service réseau ;
- une entité gestionnaire de ressources virtualisées comprenant :
   - un module de réception agencé pour recevoir une demande d'allocation de ressources d'exécution ;
   - un module d'allocation de ressources d'exécution agencé pour allouer des ressources d'exécution aux entité gestionnaire de services applicatifs et entité gestionnaire de services réseau, en fonction de la consommation prévue.

Les avantages énoncés pour le procédé d'allocation selon le premier aspect sont transposables directement au système d'allocation selon le quatrième aspect.

Selon un cinquième aspect, l'invention concerne également un programme comprenant des instructions de code de programme destinées à commander l'exécution des étapes du procédé précédemment décrit, lorsque ledit programme est exécuté sur ordinateur et un support d'enregistrement lisible par ordinateur sur lequel est enregistré un programme d'ordinateur comprenant des instructions de code de programme pour l'exécution des étapes du procédé précédemment décrit.

L'invention sera mieux comprise à l'aide de la description suivante de modes de réalisation particuliers, en référence aux dessins annexés sur lesquels :
- la figure 1 représente un système d'allocation de ressources d'exécution selon un mode particulier de réalisation ;
- les figures 2a et 2b représentent un organigramme du procédé d'allocation, et des échanges entre équipements mettant en oeuvre le procédé, selon deux modes particuliers de réalisation.

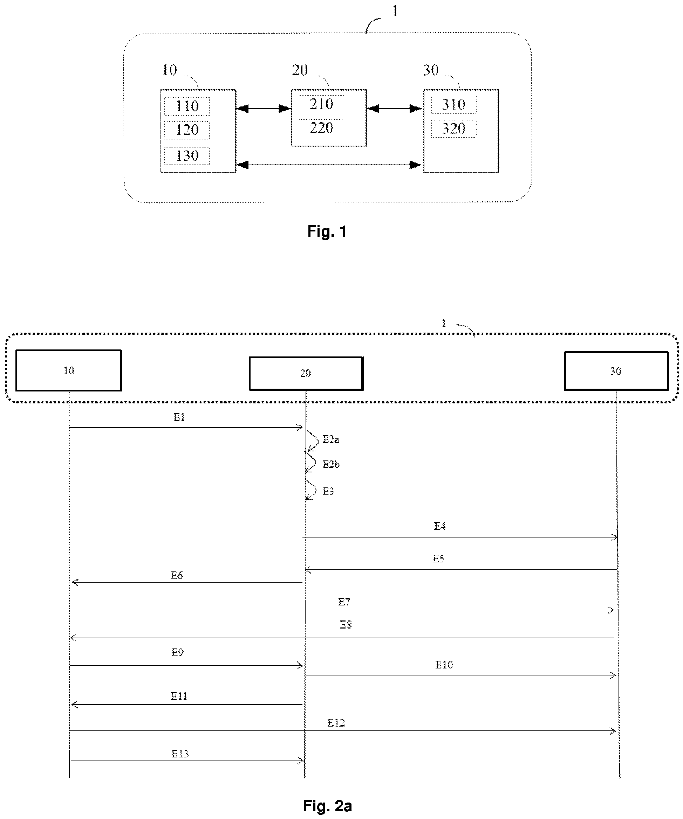

La **figure 1** représente un système 1 d'allocation de ressources d'exécution selon un mode particulier de réalisation. Le système 1 comprend une entité de gestionnaire de services applicatifs 10, une entité gestionnaire de services réseau 20, et une entité gestionnaire de ressources virtualisées 30. Le système 1 permet notamment d'allouer des ressources d'exécution pour une exécution concurrente d'un service applicatif et d'au moins un service réseau. Par ressources d'exécution on entend les ressources de calcul, de stockage, ainsi que les ressources permettant l'interconnexion réseau au sein d'une infrastructure en nuage.

L'entité gestionnaire de services applicatifs 10 est à titre d'exemple un serveur d'un fournisseur d'électricité proposant un service de relevé de consommation électrique. On suppose dans le présent mode de réalisation que les entités gestionnaires de services réseaux 20 et gestionnaire de ressources virtualisées 30 sont gérées par un même opérateur de réseaux de communication. On suppose en outre que le service de relevé de consommation électrique dépend de services réseau mis en oeuvre par le gestionnaire de services réseau 20.

L'entité gestionnaire de services applicatifs 10 et l'entité gestionnaire de services réseau 20 communiquent par exemple par l'intermédiaire d'une interface de programmation RESTful. L'entité gestionnaire de ressources virtualisées 30 communique respectivement avec l'entité gestionnaire de services applicatifs 10 et avec l'entité gestionnaire de services réseau 20 par l'intermédiaire d'une interface de programmation.

L'entité gestionnaire de ressources virtualisées 30 comprend un module de réception 310 agencé pour recevoir des demandes d'allocation de ressources d'exécution. L'entité gestionnaire de ressources virtualisées 30 comprend en outre un module d'allocation 320 de ressources d'exécution agencé pour allouer des ressources d'exécution aux entités gestionnaire de services applicatifs 10 et gestionnaire de services réseau 20, en fonction de la consommation prévue.

L'entité gestionnaire de services applicatif 10 comprend un module d'envoi/réception 110 et un module d'envoi 120. Le module d'envoi/réception 110 est agencé pour envoyer une notification d'une consommation prévue des services réseau par le service applicatif, à l'entité gestionnaire de services réseau 20. Le module d'envoi/réception 110 est également agencé pour recevoir de l'entité gestionnaire de services réseau 20 une notification de la consommation en services réseau acceptée par cette dernière entité. Le module d'envoi 120 est agencé pour envoyer une demande d'allocation de ressources d'exécution, à l'entité gestionnaire de ressources virtualisées 30.

L'entité gestionnaire de services réseau 20 comprend un module d'envoi/réception 210 agencé pour recevoir une notification, depuis l'entité gestionnaire de services applicatifs 10, d'une consommation prévue des services réseau par le service applicatif, et pour envoyer à l'entité gestionnaire de services applicatifs 10 une notification de réservation de ressources d'exécution pour l'exécution de ces services réseau. L'entité gestionnaire de services réseau 20 comprend également un module d'envoi 220 agencé pour envoyer une demande d'allocation de ressources d'exécution pour l'exécution des services réseau, à l'entité gestionnaire de ressources virtualisées 30.

Dans un autre mode de réalisation, le module 310 de l'entité gestionnaire de ressources virtualisées 30 est agencé pour envoyer des notifications de ressources d'exécution devenues disponibles afin de répondre à des demandes de ressources d'exécution qui n'ont pu être préalablement satisfaites.

Dans un autre mode de réalisation, l'entité gestionnaire de services applicatifs 10 comprend également un module de temporisation 130 activé lorsque la notification de réservation reçue par le module d'envoi/réception indique qu'une demande d'allocation de ressources d'exécution par l'entité gestionnaire de service réseau 20 est insatisfaite. Ce module de temporisation est agencé pour mettre en attente une demande d'allocation de ressources d'exécution du gestionnaire de services applicatifs 10.

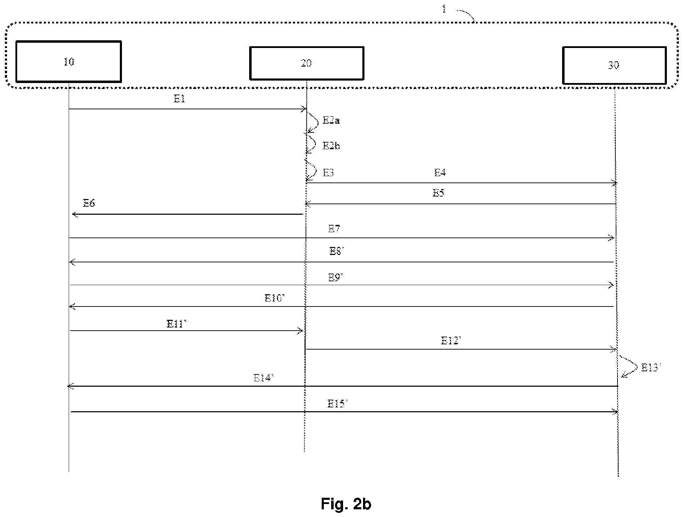

Les **figures 2a** et **2b** représentent un organigramme du procédé d'allocation, et des échanges entre équipements mettant en oeuvre le procédé, selon deux modes particuliers de réalisation. Les **figures 2a** et **2b** reprennent l'exemple introduit précédemment d'un service applicatif de relevé de consommation électrique d'un fournisseur d'électricité dépendant de services réseau pour le relevé de compteurs électriques munis de capteurs aptes à se connecter à un réseau d'opérateur de télécommunications. On suppose que le service applicatif de relevé de consommation électrique est fourni par une entité gestionnaire de services applicatifs 10, que les services réseau sont fournis par une entité gestionnaire de services réseau 20, et qu'une entité gestionnaire de ressources virtualisées 30 est en charge d'allouer des ressources d'exécution à ces deux dernières entités. Les entités gestionnaires de services applicatifs 10, gestionnaire de services réseau 20, et de ressources virtualisées 30 forment un système qui réalise le processus d'allocation de ressources d'exécution tel que précédemment décrit en relation avec la figure 1.

La **figure 2a** décrit un premier mode de réalisation dans lequel l'entité gestionnaire de services applicatifs 10 coopère avec l'entité gestionnaire de services réseau 20 en notifiant à cette dernière une consommation prévue en services réseau par le service applicatif de relevé de consommation électrique.

Lors d'une étape E1, l'entité gestionnaire de services applicatifs 10 notifie à l'entité gestionnaire de services réseau 20, une consommation prévue par le service applicatif de relevé de consommation électrique d'au moins un service réseau fourni par l'entité gestionnaire de services réseau 20. Cette consommation prévue correspond par exemple à une augmentation du besoin en services réseau pour le service applicatif et est exprimée en charge C de service compréhensible par le ou les services réseau. A titre d'exemple, cette charge C comprend un volume de données ou encore un nombre de connexions par seconde.

Lors d'une étape E2a, l'entité gestionnaire de services réseau 20 vérifie que la consommation prévue est conforme à un contrat de service entre l'entité gestionnaire de services applicatifs 10 et l'entité gestionnaire de services réseau 20. Pour cela, l'entité gestionnaire de services réseau 20 vérifie, au moyen du contrat de service, que la consommation prévue en ressources d'exécution n'excède pas un seuil de consommation prédéfini. Le contrat de service est par exemple formalisé par un fichier de paramétrage mémorisé localement par l'entité gestionnaire de services réseau 20.

Lors d'une étape E2b, l'entité gestionnaire de services réseau 20 détermine quelles sont les fonctions réseau virtualisées utilisées par le service applicatif de relevé de consommation électrique.

Lors d'une étape E3, l'entité gestionnaire de services réseau 20 détermine quelles sont les ressources d'exécution à allouer pour satisfaire la consommation prévue en services réseau par le service applicatif de relevé de consommation électrique. Plus précisément, l'entité gestionnaire de services réseau 20 détermine les fonctions réseau virtualisées nécessaires pour répondre aux besoins du service applicatif, et détermine en outre, lorsque de telles fonctions réseau sont déjà mises en oeuvre, les ressources d'exécution déjà disponibles pour chacune de ces fonctions. Ceci permet à l'entité gestionnaire de services réseau 20 de calculer les ressources d'exécution nécessaires à la consommation prévue en services réseau par l'entité gestionnaire de services applicatifs 10. Lorsqu'aucune fonction réseau virtualisée n'est mise en oeuvre, l'entité gestionnaire de services réseau 20 calcule également les ressources d'exécution nécessaires, le cas échéant, à la création de ces fonctions réseau virtualisées. L'entité gestionnaire de services réseau 20 détermine ainsi, pour chaque fonction réseau virtualisée nécessaire à la mise en oeuvre du service applicatif, s'il y a lieu ou non d'envoyer une demande d'allocation de ressources d'exécution auprès de l'entité gestionnaire de ressources virtualisées 30.

Lors d'une étape E4, l'entité gestionnaire de services réseau 20 demande une allocation de ressources d'exécution à l'entité gestionnaire de ressources virtualisées 30. Cette demande de ressources correspond au besoin en ressources calculé à l'étape E3, et est exprimée en ressources propres à l'infrastructure en nuage (e.g. ressources de calcul).

Lors d'une étape E5, l'entité gestionnaire de ressources virtualisées 30 envoie un message d'acquittement à l'entité gestionnaire de services réseau 20. Ce message indique que les ressources d'exécution demandées à l'étape E4 sont allouées aux services réseau desquels dépend le service applicatif. L'entité gestionnaire de ressources virtualisées 30 déclenche également une temporisation au bout de laquelle les ressources d'exécution sont libérées en cas de non utilisation.

Lors d'une étape E6, l'entité gestionnaire de services réseau 20 envoie une notification de la consommation en services réseau acceptée par cette dernière à l'entité gestionnaire de services applicatifs 10. Cette notification porte sur les ressources d'exécution nécessaires aux services réseau.

Lors d'une étape E7, l'entité gestionnaire de services applicatifs 10 envoie une demande d'allocation de ressources d'exécution nécessaires au service applicatif à l'entité gestionnaire de ressources virtualisées 30. Cette demande prend notamment en compte la consommation en services réseau acceptée par l'entité gestionnaire de services réseau 20 à l'étape E6.

Lors d'une étape E8, l'entité gestionnaire de ressources virtualisées 30 répond positivement à la demande d'allocation de ressources d'exécution de l'entité gestionnaire de services applicatifs 10. Il est souligné qu'en cas de réponse négative, l'entité gestionnaire de services applicatifs 10 peut réitérer sa demande d'allocation de ressources ultérieurement.

Lors d'une étape E9, l'entité gestionnaire de services applicatifs 10 notifie l'entité gestionnaire de services réseau 20 que des ressources d'exécution ont été allouées pour le service applicatif de relevé de consommation électrique.

Lors d'une étape E10, l'entité gestionnaire de services réseau 20 créée les fonctions réseau virtualisées nécessaires à la mise en oeuvre des services réseau desquels dépend le service applicatif.

Lors d'une étape E11, l'entité gestionnaire de services réseau 20 notifie l'entité gestionnaire de services applicatifs 10 que les fonctions réseau virtualisées nécessaires à la mise en oeuvre des services réseau desquels dépend le service applicatif ont été créées.

Lors d'une étape E12, l'entité de services applicatifs 10 met en oeuvre le service applicatif de relevé de consommation électrique au moyen des ressources d'exécution qui lui ont été allouées à l'étape E8.

Lors d'une étape E13, l'entité gestionnaire de services applicatifs 10 notifie l'entité gestionnaire de services réseau 20 que l'augmentation des ressources d'exécution pour le service applicatif est effective.

Dans un autre mode de réalisation, les étapes E12 et E13 précèdent soit les étapes E9, E10 et E11, soit les étapes E10 et E11.

Dans un autre mode de réalisation, lors de l'étape E1, l'entité gestionnaire de services applicatifs 10 notifie à l'entité gestionnaire de services réseau 20, un identifiant de service. Un tel identifiant permet notamment d'aisément identifier le service concerné par une demande d'allocation de ressources d'exécution dans le cas où l'entité gestionnaire de services applicatifs 10 gère plusieurs services.

Dans un autre mode de réalisation, lors de l'étape E1, l'entité gestionnaire de services applicatifs 10 notifie en plus de la consommation prévue en services réseau par le service applicatif, au moins un palier de consommation intermédiaire indiquant une consommation intermédiaire inférieure à la consommation prévue. Ces paliers de consommation intermédiaires sont ensuite repris dans la demande de ressources d'exécution envoyée par l'entité gestionnaire de services réseau 20 à l'étape E4. L'entité gestionnaire de services réseau 20 les transmet ainsi à l'entité gestionnaire de ressources virtualisées 30. Les paliers de consommation intermédiaire sont par exemple transmis par l'entité gestionnaire de services réseau 20 dans un ordre décroissant de volumes de ressources souhaités. Dans cet autre mode de réalisation, la notification de réservation de ressources d'exécution envoyée à l'étape E6 comprend le palier de consommation intermédiaire accepté par l'entité gestionnaire de ressources virtualisées 30. Cette notification peut également indiquer un refus de l'entité gestionnaire de ressources virtualisées 30 d'allouer des ressources d'exécution lorsque cette dernière entité a par exemple refusé d'allouer des ressources pour l'ensemble des paliers de consommation intermédiaire. La consommation prévue ainsi que les paliers de consommation intermédiaire sont en outre transmis par l'intermédiaire d'une structure de données (e.g. table, matrice, fichier) ayant, à titre d'exemple, la forme suivante :

| Consommation en services réseau | Consommation prévue | Consommation intermédiaire 1 | Consommation intermédiaire 2 |
|---|---|---|---|
| différence en nombre de connexions simultanées | +1000 | +500 | +100 |
| différence en nombre de nouvelles connexions simultanées par unité de temps | +100 | +50 | +10 |
| différence du débit moyen par capteur (volume de données par unité de temps) | 0 | 0 | 0 |
| différence du débit crête par capteur | +50 | +50 | 0 |

Dans un autre mode de réalisation dans lequel des fonctions réseau virtualisées sont sollicitées par plusieurs services applicatifs distincts, la création de ces dernières est déclenchée à l'initiative de l'entité gestionnaire de services réseau 20 sans attendre la notification de l'entité gestionnaire de services applicatifs.

La **figure 2b** décrit un deuxième mode de réalisation dans lequel en cas d'insuffisance de ressources d'exécution pour les services applicatifs et réseau, l'entité gestionnaire de services applicatifs 10 maintien une demande de ressources d'exécution conformément à une consommation prévue, et demande un stockage des données remontées par l'intermédiaire des services réseau afin que ces données soient traitées en différé par l'entité gestionnaire de services applicatifs 10. Les entités mises en oeuvre sont identiques aux entités décrites en relation avec la figure 2a. De même, les étapes E1 à E7 sont à nouveau mises en oeuvre telles que décrites précédemment en relation avec la figure 2a.

Puis lors d'une étape E8', l'entité gestionnaire de ressources virtualisées 30 met en attente la demande d'allocation de ressources d'exécution envoyée à l'étape E7 par l'entité gestionnaire de services applicatifs 10. Cette mise en attente résulte par exemple d'une indisponibilité au sein de l'infrastructure en nuage des ressources d'exécution demandées.

Lors d'une étape E9', l'entité gestionnaire de services applicatifs 10 envoie une demande de ressources de stockage à l'entité gestionnaire de ressources virtualisées 30. Le volume de ressources de stockage demandé correspond à un volume estimé de données brutes transmises par les services réseau. Ce volume est estimé par l'entité gestionnaire de services applicatifs 10 à partir du nombre de capteurs (information connue du service applicatif de relevé de consommation) et du volume de données moyen remonté par chaque capteur.

Lors d'une étape E10', l'entité gestionnaire de ressources virtualisées 30 accepte la demande de ressources de stockage et le notifie à l'entité gestionnaire de services applicatifs 10.

Lors d'une étape E11', l'entité gestionnaire de services applicatifs 10 notifie l'entité gestionnaire de services réseau 20 que l'infrastructure en nuage est prête à recevoir et stocker les données récupérées par les services réseau.

Lors d'une étape E12', l'entité gestionnaire de services réseau 20 demande la création des fonctions réseau virtualisées nécessaires à la mise en oeuvre des services réseau desquels dépend le service applicatif à l'entité gestionnaire de ressources virtualisées 30.

Lors d'une étape E13', l'entité gestionnaire de ressources virtualisées 30 contrôle la disponibilité de ces ressources d'exécution, et détermine que les ressources d'exécution demandées par l'entité gestionnaire de services applicatifs 10 à l'étape E7 sont disponibles.

Lors d'une étape E14', les ressources d'exécution demandées par l'entité gestionnaire de services applicatifs 10 à l'étape E7 étant disponibles, l'entité gestionnaire de ressources virtualisées 30 le notifie à l'entité gestionnaire de services applicatifs 10.

Lors d'une étape E15', l'entité gestionnaire de services applicatifs 10 demande la mise en oeuvre du service applicatif de relevé de consommation électrique à l'entité gestionnaire de ressources virtualisées 30 au moyen des ressources d'exécutions demandées à l'étape E7. Les ressources d'exécution sont disponibles et permettent le traitement des données stockées par les ressources de stockage.

Les modes de réalisation précédemment décrits en relation avec les figures 2a et 2b présentent un service applicatif de relevé de consommation électrique. Il n'existe cependant aucune limitation quant au type de service applicatif auquel s'applique le procédé objet de l'invention. Le procédé peut par exemple aisément être décliné à des services de vidéo-surveillance ou encore de réalité augmentée.

## Revendications

1. Procédé d'allocation de ressources d'exécution, par une entité gestionnaire de ressources virtualisées (30), pour une exécution d'un service applicatif et d'au moins un service réseau, l'exécution dudit service applicatif dépendant de l'exécution concurrente dudit au moins un service réseau, comprenant :
- une première demande (E4) d'allocation de ressources d'exécution par une entité gestionnaire dudit au moins un service réseau (20) à ladite entité gestionnaire de ressources virtualisées ;
- une deuxième demande (E7) d'allocation de ressources d'exécution par une entité gestionnaire dudit service applicatif (10) à ladite entité gestionnaire de ressources virtualisées ;
**caractérisé en ce que** ledit procédé comprend, préalablement auxdites demandes, une notification (El), par l'entité gestionnaire dudit service applicatif, d'une consommation prévue par ledit service applicatif d'au moins un service réseau fourni par ladite entité gestionnaire de services réseau, à l'entité gestionnaire de services réseau.

2. Procédé selon la revendication 1, dans lequel ladite notification par l'entité gestionnaire dudit service applicatif comprend en outre au moins un palier de consommation intermédiaire indiquant une consommation intermédiaire inférieure à ladite consommation prévue, ladite première demande de ressources d'exécution comprenant au moins un palier de ressources d'exécution correspondant audit au moins un palier de consommation intermédiaire.

3. Procédé selon la revendication 1, dans lequel ladite notification par l'entité gestionnaire dudit service applicatif comprend en outre au moins un palier de consommation intermédiaire indiquant une consommation intermédiaire inférieure à ladite consommation prévue, ladite première demande de ressources d'exécution étant suivie lorsqu'elle n'est pas satisfaite, par des demandes successives de ressources d'exécution correspondants auxdits paliers de consommation intermédiaire, jusqu'à satisfaction de l'une desdites demandes successives.

4. Procédé selon la revendication 1, comprenant, en réponse à ladite première demande de ressources d'exécution, une notification (E6) de la consommation en services réseau acceptée par l'entité gestionnaire de services réseau (20) à l'entité gestionnaire de services applicatifs préalablement à la deuxième demande de ressources d'exécution, ladite deuxième demande étant fonction desdites ressources d'exécution réservées.

5. Procédé selon la revendication 4, comprenant en outre, lorsque ladite notification de la consommation en services réseau acceptée indique que ladite première demande de ressources d'exécution est insatisfaite, une mise en attente (E8') de ladite deuxième demande de ressources.

6. Procédé selon la revendication 4, comprenant en outre, lorsque ladite notification de consommation en service réseau acceptée indique que ladite première demande de ressources d'exécution est insatisfaite, une demande (E9') de l'entité gestionnaire de services applicatifs à l'entité gestionnaire de ressources virtualisées d'une réservation de ressources de stockage, lesdites ressources de stockage correspondant à un volume estimé de données à transmettre par l'entité gestionnaire de services réseau à l'entité gestionnaire de services applicatif après exécution dudit au moins un service réseau, l'exécution dudit service applicatif étant différée.

7. Entité gestionnaire de services applicatifs (10) fournissant un service applicatif dont l'exécution dépend d'une exécution concurrente d'au moins un service réseau par une entité gestionnaire de services réseau, comprenant :
- un module d'envoi/réception (110) agencé pour envoyer une notification d'une consommation prévue par ledit service applicatif dudit au moins un service réseau, à ladite entité gestionnaire de services réseau, et pour recevoir de ladite entité gestionnaire de services réseau une notification de la consommation en services réseau acceptée par ladite entité gestionnaire de services réseau ;
- un module d'envoi (120) agencé pour envoyer une demande d'allocation de ressources d'exécution, à ladite entité gestionnaire de ressources virtualisées ainsi qu'une demande d'allocation de ressources de stockage (E9').

8. Entité gestionnaire de services applicatifs (10) selon la revendication 7, comprenant en outre un module de temporisation (130) activé lorsque ladite notification de réservation indique qu'une demande d'allocation de ressources d'exécution par ladite entité gestionnaire de service réseau est insatisfaite, et agencé pour mettre en attente une demande d'allocation de ressources d'exécution dudit gestionnaire de services applicatifs.

9. Entité gestionnaire de services réseau (20), fournissant au moins un service réseau, pour l'exécution d'un service applicatif par une entité de gestion de services applicatifs, comprenant :
- un module d'envoi/réception (210) agencé pour recevoir une notification, depuis ladite entité gestionnaire de services applicatifs, d'une consommation prévue par ledit service applicatif dudit au moins un service réseau, et pour envoyer à ladite entité gestionnaire de services applicatifs une notification de la consommation en services réseau acceptée par ladite entité gestionnaire de services réseau (20) pour l'exécution dudit au moins un service réseau ;
- un module d'envoi (220) agencé pour envoyer une demande d'allocation desdites ressources d'exécution pour l'exécution dudit au moins un service réseau, à une entité gestionnaire de ressources virtualisées.

10. Système (1) d'allocation de ressources d'exécution, pour une exécution d'un service applicatif et d'au moins un service réseau, l'exécution dudit service applicatif dépendant de l'exécution concurrente dudit au moins un service réseau, comprenant :
- une entité gestionnaire de services applicatifs (10) selon l'une des revendications 7 ou 8, ladite entité gestionnaire de services applicatifs fournissant ledit service applicatif ;
- une entité gestionnaire de services réseau (20) selon la revendication 9, ladite entité gestionnaire de services réseau fournissant ledit au moins un service réseau ;
- une entité gestionnaire de ressources virtualisées (30) comprenant :
- un module de réception (310) agencé pour recevoir une demande d'allocation de ressources d'exécution ;
- un module d'allocation (320) de ressources d'exécution agencé pour allouer des ressources d'exécution auxdites entité gestionnaire de services applicatifs et entité gestionnaire de services réseau, en fonction de ladite consommation prévue.

11. Média contenant un programme pour une entité gestionnaire de services applicatifs, comprenant des instructions de code de programme destinées à commander l'exécution des étapes du procédé selon l'une des revendications 1 à 6, lorsque ledit programme est exécuté par une entité gestionnaire de services applicatifs.

12. Média contenant un programme pour une entité gestionnaire de services réseau, comprenant des instructions de code de programme destinées à commander l'exécution des étapes du procédé selon l'une des revendications 1 à 6, lorsque ledit programme est exécuté par une entité gestionnaire de services réseau.

## Patentansprüche

1. Verfahren zur Zuweisung von Ausführungsressourcen durch eine Verwaltungseinheit virtualisierter Ressourcen (30) für eine Ausführung eines Anwendungsdiensts und mindestens eines Netzwerkdiensts, wobei die Ausführung des Anwendungsdiensts von der gleichzeitigen Ausführung des mindestens einen Netzwerkdiensts abhängt, das Folgendes umfasst:
- eine erste Zuweisungsanfrage (E4) von Ausführungsressourcen durch eine Verwaltungseinheit des mindestens einen Netzwerkdiensts (20) zu der Verwaltungseinheit virtualisierter Ressourcen;
- eine zweite Zuweisungsanfrage (E7) von Ausführungsressourcen durch eine Verwaltungseinheit des Anwendungsdiensts (10) zu der Verwaltungseinheit virtualisierter Ressourcen;
**dadurch gekennzeichnet, dass** das Verfahren vor den Anfragen eine Bekanntgabe (E1) durch die Verwaltungseinheit des Anwendungsdiensts eines vorgesehenen Verbrauchs durch den Anwendungsdienst mindestens eines Netzwerkdiensts, der von der Verwaltungseinheit von Netzwerkdiensten geliefert wird, zu der Verwaltungseinheit von Netzwerkdiensten umfasst.

2. Verfahren nach Anspruch 1, wobei die Bekanntgabe durch die Verwaltungseinheit des Anwendungsdiensts außerdem mindestens eine Zwischenverbrauchsstufe umfasst, die einen Zwischenverbrauch angibt, der niedriger ist als der vorgesehene Verbrauch, wobei die erste Ausführungsressourcenanfrage mindestens eine Ausführungsressourcenstufe umfasst, die der mindestens einen Zwischenverbrauchsstufe entspricht.

3. Verfahren nach Anspruch 1, wobei die Bekanntgabe durch die Verwaltungseinheit des Anwendungsdiensts außerdem mindestens eine Zwischenverbrauchsstufe umfasst, die einen Zwischenverbrauch angibt, der niedriger ist als der vorgesehene Verbrauch, wobei auf die erste Ausführungsressourcenanfrage, wenn sie nicht erfüllt wird, sukzessive Anwendungsressourcenanfragen, die den Zwischenverbrauchsstufen entsprechen, bis zur Erfüllung einer der sukzessiven Anfragen erfolgen.

4. Verfahren nach Anspruch 1, das als Reaktion auf die erste Ausführungsressourcenanfrage eine Bekanntgabe (E6) des Verbrauchs an Netzwerkdiensten, der von der Verwaltungseinheit von Netzwerkdiensten (20) akzeptiert wird, zu der Verwaltungseinheit von Anwendungsdiensten vor der zweiten Ausführungsressourcenanfrage umfasst, wobei die zweite Anfrage von den reservierten Ausführungsressourcen abhängt.

5. Verfahren nach Anspruch 4, das außerdem, wenn die Bekanntgabe des akzeptierten Verbrauchs an Netzwerkdiensten angibt, dass die erste Ausführungsressourcenanfrage nicht erfüllt ist, ein Stellen auf Warten (E8') der zweiten Ressourcenanfrage umfasst.

6. Verfahren nach Anspruch 4, das außerdem, wenn die Bekanntgabe des akzeptierten Verbrauchs an Netzwerkdienst angibt, dass die erste Ausführungsressourcenanfrage nicht erfüllt ist, eine Anfrage (E9') der Verwaltungseinheit von Anwendungsdiensten zu der Verwaltungseinheit virtualisierter Ressourcen um eine Speicherressourcenreservierung umfasst, wobei die Speicherressourcen einem geschätzten Volumen an Daten, das von der Verwaltungseinheit von Netzwerkdiensten zu der Verwaltungseinheit von Anwendungsdiensten nach der Ausführung des mindestens einen Netzwerkdiensts zu übertragen ist, entspricht, wobei die Ausführung des Anwendungsdiensts aufgeschoben wird.

7. Verwaltungseinheit von Anwendungsdiensten (10), die einen Anwendungsdienst liefert, dessen Ausführung von einer gleichzeitigen Ausführung mindestens eines Netzwerkdiensts durch eine Verwaltungseinheit von Netzwerkdiensten abhängt, die Folgendes umfasst:
- ein Sende-/Empfangsmodul (110), das eingerichtet ist, um eine Bekanntgabe eines vorgesehenen Verbrauchs durch den Anwendungsdienst des mindestens einen Netzwerkdiensts zu der Verwaltungseinheit von Netzwerkdiensten zu senden, und um von der Verwaltungseinheit von Netzwerkdiensten eine Bekanntgabe des Verbrauchs an Netzwerkdiensten, der von der Verwaltungseinheit von Netzwerkdiensten akzeptiert wird, zu empfangen;
- ein Sendemodul (120), das eingerichtet ist, um eine Ausführungsressourcenzuweisungsanfrage zu der Verwaltungseinheit virtualisierter Ressourcen sowie eine Speicherressourcenzuweisungsanfrage (E9') zu senden.

8. Verwaltungseinheit von Anwendungsdiensten (10) nach Anspruch 7, die außerdem ein Verzögerungsmodul (130) umfasst, das aktiviert wird, wenn die Reservierungsbekanntgabe angibt, dass eine Ausführungsressourcenanfrage durch die Verwaltungseinheit von Netzwerkdiensten nicht erfüllt ist, und eingerichtet ist, um eine Zuweisungsanfrage von Ausführungsressourcen der Verwaltung von Netzwerkanwendungen auf Warten zu stellen.

9. Verwaltungseinheit von Netzwerkdiensten (20), die mindestens einen Netzwerkdienst liefert, zur Ausführung eines Anwendungsdiensts durch eine Verwaltungseinheit von Anwendungsdiensten, die Folgendes umfasst:
- ein Sende-/Empfangsmodul (210), das eingerichtet ist, um eine Bekanntgabe von der Verwaltungseinheit von Anwendungsdiensten eines vorgesehenen Verbrauchs durch den Anwendungsdienst des mindestens einen Netzwerkdiensts zu empfangen, und um zu der Verwaltungseinheit von Anwendungsdiensten eine Bekanntgabe des Verbrauchs an Netzwerkdiensten, der von der Verwaltungseinheit von Netzwerkdiensten (20) für die Ausführung des mindestens einen Netzwerkdiensts akzeptiert wird, zu senden;
- ein Sendemodul (220), das eingerichtet ist, um eine Zuweisungsanfrage der Ausführungsressourcen für die Ausführung des mindestens einen Netzwerkdiensts zu einer Verwaltungseinheit virtualisierter Ressourcen zu senden.

10. System (1) zur Zuweisung von Ausführungsressourcen für eine Ausführung eines Anwendungsdiensts und mindestens eines Netzwerkdiensts, wobei die Ausführung des Anwendungsdiensts von der gleichzeitigen Ausführung des mindestens einen Netzwerkdiensts abhängt, das Folgendes umfasst:
- eine Verwaltungseinheit von Anwendungsdiensten (10) nach einem der Ansprüche 7 oder 8, wobei die Verwaltungseinheit von Anwendungsdiensten den Anwendungsdienst liefert;
- eine Verwaltungseinheit von Netzwerkdiensten (20) nach Anspruch 9, wobei die Verwaltungseinheit von Netzwerkdiensten den mindestens einen Netzwerkdienst liefert;
- eine Verwaltungseinheit virtualisierter Ressourcen (30), die Folgendes umfasst:
- ein Empfangsmodul (310), das eingerichtet ist, um eine Ausführungsressourcenzuweisungsanfrage zu empfangen;
- ein Modul zur Zuweisung (320) von Ausführungsressourcen, das eingerichtet ist, um der Verwaltungseinheit von Anwendungsdiensten und der Verwaltungseinheit von Netzwerkdiensten Ausführungsressourcen in Abhängigkeit von dem vorgesehenen Verbrauch zuzuweisen.

11. Medien, die ein Programm für eine Verwaltungseinheit von Anwendungsdiensten enthalten, das Programmcodeanweisungen umfasst, die dazu bestimmt sind, das Ausführen der Schritte des Verfahrens nach einem der Ansprüche 1 bis 6 zu steuern, wenn das Programm von einer Verwaltungseinheit von Anwendungsdiensten ausgeführt wird.

12. Medien, die ein Programm für eine Verwaltungseinheit von Netzwerkdiensten enthalten, das Programmcodeanweisungen umfasst, die dazu bestimmt sind, das Ausführen der Schritte des Verfahrens nach einem der Ansprüche 1 bis 6 zu steuern, wenn das Programm von einer Verwaltungseinheit von Netzwerkdiensten ausgeführt wird.

## Claims

1. Method for allocating execution resources, by a virtualized-resources manager entity (30), for an execution of an application service and of at least one network service, the execution of said application service depending on the concurrent execution of said at least one network service, comprising:
- a first request (E4) for allocation of execution resources by a manager entity of said at least one network service (20) to said virtualized-resources manager entity;
- a second request (E7) for allocation of execution resources by a manager entity of said application service (10) to said virtualized-resources manager entity;
**characterized in that** said method comprises, prior to said requests, a notification (E1), by the manager entity of said application service, of a consumption forecast by said application service of at least one network service provided by said network services manager entity, to the network services manager entity.

2. Method according to Claim 1, in which said notification by the manager entity of said application service further comprises at least one intermediate consumption level indicating an intermediate consumption lower than said consumption forecast, said first request for execution resources comprising at least one level of execution resources corresponding to said at least one intermediate consumption level.

3. Method according to Claim 1, in which said notification by the manager entity of said application service further comprises at least one intermediate consumption level indicating an intermediate consumption lower than said consumption forecast, said first request for execution resources being followed, when it is not satisfied, by successive requests for execution resources corresponding to said intermediate consumption levels, until one of said successive requests is satisfied.

4. Method according to Claim 1, comprising, in response to said first request for execution resources, a notification (E6) of the consumption in terms of network services accepted by the network services manager entity (20) to the application services manager entity prior to the second request for execution resources, said second request being a function of said reserved execution resources.

5. Method according to Claim 4, further comprising, when said notification of the accepted consumption in terms of network services indicates that said first request for execution resources is unsatisfied, a placement (E8') of said second request for resources on hold.

6. Method according to Claim 4, further comprising, when said notification of accepted consumption in terms of network service indicates that said first request for execution resources is unsatisfied, a request (E9') from the application services manager entity to the virtualized-resources manager entity for a reservation of storage resources, said storage resources corresponding to an estimated volume of data to be transmitted by the network services manager entity to the application services manager entity after the execution of said at least one network service, the execution of said application service being deferred.

7. Application services manager entity (10) providing an application service whose execution depends on a concurrent execution of at least one network service by a network services manager entity, comprising:
- a sending/receiving module (110) arranged to send a notification of a consumption forecast by said application service of said at least one network service to said network services manager entity, and to receive from said network services manager entity a notification of the consumption in terms of network services accepted by said network services manager entity;
- a sending module (120) arranged to send a request for allocation of execution resources to said virtualized-resources manager entity and a request for allocation of storage resources (E9').

8. Application services manager entity (10) according to Claim 7, further comprising a timer module (130) activated when said reservation notification indicates that a request for allocation of execution resources by said network service manager entity is unsatisfied, and arranged to place a request for allocation of execution resources from said application services manager on hold.

9. Network services manager entity (20), providing at least one network service, for the execution of an application service by an application service management entity, comprising:
- a sending/receiving module (210) arranged to receive a notification, from said application services manager entity, of a consumption forecast by said application service of said at least one network service, and to send to said application services manager entity a notification of the consumption in terms of network services accepted by said network services manager entity (20) for the execution of said at least one network service;
- a sending module (220) arranged to send a request for allocation of said execution resources for the execution of said at least one network service to a virtualized-resources manager entity.

10. System (1) for allocating execution resources, for an execution of an application service and of at least one network service, the execution of said application service depending on the concurrent execution of said at least one network service, comprising:
- an application services manager entity (10) according to either of Claims 7 and 8, said application services manager entity providing said application service;
- a network services manager entity (20) according to Claim 9, said network services manager entity providing said at least one network service;
- a virtualized-resources manager entity (30) comprising:
- a reception module (310) arranged to receive a request for allocation of execution resources;
- an execution resources allocation module (320) arranged to allocate execution resources to said application services manager entity and network services manager entity, as a function of said consumption forecast.

11. Medium containing a program for an application services manager entity, comprising program code instructions intended to control the execution of the steps of the method according to one of Claims 1 to 6, when said program is executed by an application services manager entity.

12. Medium containing a program for a network services manager entity, comprising program code instructions intended to control the execution of the steps of the method according to one of Claims 1 to 6, when said program is executed by a network services manager entity.
